# EUROPÄISCHE PATENTSCHRIFT

(11) **EP 3 634 726 B1**
(45) Veröffentlichungstag und Bekanntmachung des Hinweises auf die Patenterteilung: **25.01.2023**
(21) Anmeldenummer: 18732647.5
(22) Anmeldetag: 05.06.2018
(51) Int. Cl.: B29C 64/165, B33Y 70/00, B33Y 10/00, B22C 1/22

(54) **VERFAHREN ZUR HERSTELLUNG VON DREIDIMENSIONAL GESCHICHTETEN FORMKÖRPERN**
METHOD FOR PRODUCING THREE-DIMENSIONALLY LAYERED SHAPED BODIES
PROCÉDÉ DE FABRICATION DE CORPS FAÇONNÉS STRATIFIÉS EN TROIS DIMENSIONS

(30) Priorität: 08.06.2017 DE 102017112681
(43) Veröffentlichungstag der Anmeldung: 15.04.2020
(73) Patentinhaber: ASK Chemicals GmbH, 40721 Hilden (DE)
(72) Erfinder: HURKES, Natascha, 41189 Mönchengladbach (DE); BARTELS, Dennis, 46284 Dorsten (DE); MÜLLER, Jens, 42781 Haan (DE)
(74) Vertreter: Müller Schupfner & Partner Patent- und Rechtsanwaltspartnerschaft mbB
(86) Internationale Anmeldenummer: PCT/DE2018/100535
(87) Internationale Veröffentlichungsnummer: WO 2018/224093

(56) Entgegenhaltungen:
- EP-A1- 3 093 081
- WO-A2-01/68336
- DE-U1-202011 110 617
- DE-U1-202011 110 617

## Beschreibung

Die Erfindung betrifft ein Verfahren zur Herstellung von dreidimensional geschichteten Formkörpern durch schichtweisen Aufbau unter Verwendung einer Harzkomponente enthaltend zumindest ein Furanharz und mehr als 5 Gew.% und weniger als 50 Gew.% monomeren Furfurylalkohol sowie einer Säure. Die so hergestellten Formkörper sind u.a. als Gießformen und -kerne für den Metallguss geeignet.

Es sind verschiedene Methoden zum schichtweisen Aufbau dreidimensionaler Formkörper bekannt. Mit Hilfe dieser Verfahren lassen sich Körper mit selbst kompliziertesten Geometrien durch 3D-Druck schichtweise und ohne Formwerkzeuge direkt aus den CAD-Daten herstellen. Dies ist mit konventionellen formgebundenen Methoden nicht möglich.

Die WO 2001/068336 A2 offenbart unterschiedliche Bindemittel für den schichtweisen Aufbau. Unter anderem wird auch die Verwendung eines nicht näher beschriebenen Furanharzes mit mindestens 50% Furfurylalkohol und höchstens 4% Ethylenglykol als Bindemittelkomponente genannt. Die Harzkomponente des Bindemittels wird schichtweise über die gesamte Arbeitsfläche des losen Formgrundstoffes aufgesprüht und danach ebenfalls schichtweise, aber unter selektivem Aufbringen eines Härters, wie einer organischen Säure, ausgehärtet.

Die EP 1268165 B1 variiert dieses Verfahren, indem sowohl flüssiger Binder, unter anderem ebenfalls ein nicht näher beschriebenes Furanharz, als auch flüssiger Härter nacheinander in der Reihenfolge Harzkomponente und danach Härter selektiv und schichtweise auf die auszuhärtenden Teilbereiche aufgebracht werden.

Nach der EP 1509382 B1 wird die Harzkomponente des Bindemittels nicht mehr schichtweise über einen Druckkopf aufgegeben, sondern direkt mit dem Formgrundstoff vermischt und schichtweise mit dem Formgrundstoff zusammen aufgebracht. Diese Mischung aus Harzkomponente und Formgrundstoff wird danach durch den selektiven Auftrag des Härters ausgehärtet.

In EP 1638758 B1 wird die Reihenfolge der Zugabe umgekehrt. Zuerst wird der Formgrundstoff mit einem Härter vorgemischt und danach die Harzkomponente schichtweise selektiv aufgetragen. Als Härter werden u.a. Säuren, z.B. wässrige *para-*Toluolsulfonsäure, und als Harzkomponente wieder unter anderem Furanharze beschrieben, jedoch erneut, wenn näher spezifiziert, unter Verwendung eines Furanharzes mit mindestens 50% Furfurylalkohol.

In der DE 102014106178 A1 wird ein Verfahren beschrieben, in dem ein Formgrundstoff mittels eines alkalischen Phenolharzes, eines Esters und wahlweise eines anorganischen Additivs schichtweise ausgehärtet wird. EP 3093081 A1 offenbart ein Verfahren zum schichtweisen Aufbau von Formkörpern.

Insbesondere das System Säure/Furanharz entsprechend EP 1638758 B1 und das System Ester/alkalisches Phenolharz entsprechend DE 102014106178 A1 haben beim schichtweisen Aufbau von Formkörpern in der Praxis eine gewisse Verbreitung gefunden und werden bei der Entwicklung neuer Gussteile sowie bei der Herstellung von Einzelteilen oder kleinen Serien eingesetzt, bei denen die konventionelle Fertigung mit Formwerkzeugen zu aufwendig und teuer bzw. nur mit einem komplizierten Kernpaket darstellbar wäre.

Insbesondere das System Säure/Furanharz weist den Nachteil auf, dass nach diesem Verfahren hergestellte Formkörper erst aufwendig von einer anhaftenden und nicht bedruckten Mischung aus Formgrundstoff und Säure- oder Harzkomponente befreit werden müssen. Personen, die diese Arbeit durchführen, sind dabei neben Stäuben auch Lösungsmittel- und Bindemitteldämpfen ausgesetzt.

### Aufgabe der Erfindung

Es ist Aufgabe der vorliegenden Erfindung ein Bindemittel für den schichtenweisen Aufbau von dreidimensionalen Formkörpern zur Verfügung zu stellen, dass die schichtweise Herstellung von dreidimensionalen Formkörpern erlaubt, welche leicht und konturenscharf von einer nicht bedruckten, anhaftenden Mischung aus Formgrundstoff und Säure- oder Harzkomponente befreit werden können. Neben der hohen Zeiteinsparung ist die verminderte Belastung durch Lösungsmittel- und Bindemitteldämpfe hierbei ein weiterer Vorteil.

### Zusammenfassung der Erfindung

Es wurde überraschend gefunden, dass ein Bindemittel umfassend zumindest
(a) eine Harzkomponente umfassend mehr als 15% Gew.% und weniger als 90 Gew.% eines Furanharzes erhältlich aus der Umsetzung von zumindest einer Aldehyd-Verbindung, insbesondere Formaldehyd mit Furfurylalkohol und ggf. mit weiteren Monomeren sowie mehr als 5 Gew.%, bevorzugt mehr als 10 Gew.% und besonders bevorzugt mehr als 15 Gew.% sowie weniger als 50 Gew.%, bevorzugt weniger als 45 Gew.% und besonders bevorzugt weniger als 40 Gew.% monomerem Furfurylalkohol bezogen auf die Harzkomponente, und
(b) eine Säure
   das Problem der Anhaftungen einer nicht bedruckten Mischung aus Säure und Formgrundstoff oder Harzkomponente und Formgrundstoff an den so hergestellten Formkörpern signifikant verringert.

Diese und andere Aufgaben werden durch den Gegenstand der unabhängigen Patentansprüche gelöst, vorteilhafte Weiterbildungen sind Gegenstand der abhängigen Patentansprüche oder werden nachstehend beschrieben.

Die vorliegende Erfindung umfasst somit ein Bindemittel umfassend eine Säure und eine Harzkomponente, umfassend zumindest ein Furanharz und enthaltend monomeren Furfurylalkohol von einerseits mehr als 5 Gew.%, bevorzugt mehr als 10 Gew.% und besonders bevorzugt mehr als 15 Gew.% Furfurylalkohol und anderseits weniger als 50 Gew.%, bevorzugt weniger als 45 Gew.% und besonders bevorzugt weniger als 40 Gew.% monomerem Furfurylalkohol, bezogen jeweils auf die Harzkomponente.

Das Furanharz ist dadurch gekennzeichnet, dass dieses aus Aldehyd-Verbindung(en), insbesondere Formaldehyd, mit Furfurylalkohol und ggf. mit weiteren Monomeren wie insbesondere Harnstoff, Furfurylalkohol-Derivaten (per Definition umfassen die Furfurylalkohol-Derivate daher Furfurylalkohol selbst nicht) und/oder Phenol-Derivaten aufgebaut ist. Dabei ist das Furanharz insbesondere zu größer 60 Gew.%, bevorzugt größer 70 Gew.% und besonders bevorzugt größer 80 Gew.% in Summe bezogen auf alle eingesetzten Monomere aus Furfurylalkohol und Formaldehyd als Monomere aufgebaut.

Mit diesem Bindemittel kann die sogenannte Jobbox des 3D-Druckers räumlich effizienter genutzt werden, d.h. Formkörper können räumlich näher aneinander hergestellt werden, da ein "Verschmelzen" der Formkörper durch die geringere Tendenz zur Sandanhaftung verhindert wird. Dies erhöht auch die Wiederverwendbarkeit der losen, nicht bedruckten Mischung aus Formgrundstoff und Säure- oder Harzkomponente deutlich. Durch den verringerten Anteil an monomerem Furfurylalkohol können Furfurylalkohol-Dämpfe im Inneren der sogenannten Jobbox während des Verdruckprozesses deutlich reduziert und Verunreinigungen des Bauraumes und des Druckkopfes minimiert werden.

### Detaillierte Beschreibung der Erfindung

Überraschenderweise wurde gefunden, dass ein dreidimensionaler Formkörper hergestellt mit einer Harzkomponente enthaltend ein Furanharz und mit weniger als 50 Gew.%, bevorzugt weniger als 45 Gew.% und insbesondere bevorzugt mit weniger als 40 Gew.% monomerem Furfurylalkohol (bezogen auf die Harzkomponente) und einer Säure deutlich weniger Anhaftungen nicht bedruckter Mischung aus Formgrundstoff und Säure- oder Harzkomponente aufweist, als ein Formkörper hergestellt mit einem System bestehend aus einem Furanharz mit mindestens 50 Gew.% monomerem Furfurylalkohol bei Anwendung eines 3D-Druckverfahrens unter schichtweiser Herstellung der dreidimensionalen Formkörper.

Das erfindungsgemäße Verfahren umfasst nach einer ersten bevorzugten Alternative folgende Schritte:
ia) Herstellung einer Mischung aus feuerfestem Formgrundstoff und einer Säure, insbesondere bei Temperaturen von 10 bis 45°C, wobei bezogen auf die Formstoffmischung vorzugsweise größer 80 Gew.%, insbesondere größer 90 Gew.%, besonders bevorzugt größer 95 Gew.% feuerfester Formgrundstoff und zwischen 0,1 Gew.% bis 3,1 Gew.%, bevorzugt zwischen 0,1 Gew.% und 2,6 Gew.% und besonders bevorzugt zwischen 0,1 Gew.% und 2,1 Gew.% Säure, bezogen auf den feuerfesten Formgrundstoff bzw. zwischen 0,1 Gew.% bis 3 Gew.%, bevorzugt zwischen 0,1 Gew.% und 2,5 Gew.% und besonders bevorzugt zwischen 0,1 Gew.% und 2 Gew.% bezogen auf die Formstoffmischung verwendet werden;
ib) schichtweise Ausbreitung der (losen) Mischung aus Säure und feuerfestem Formgrundstoff mit einer Schichtdicke von 0,03 mm bis 3 mm, vorzugsweise 0,03 bis 1,5 mm als Formgrundstoffschicht;
ic) Bedrucken ausgewählter Bereiche der ausgebreiteten Mischung aus zumindest Säure und Formgrundstoff mit der Harzkomponente, wobei die Menge der Harzkomponente zwischen 0,1 Gew.% und 5 Gew.%, bevorzugt zwischen 0,3 Gew.% und 4 Gew.% und besonders bevorzugt zwischen 0,5 Gew.% und 3 Gew.%, bezogen auf die Formstoffmischung beträgt und die Temperatur des Druckkopfes vorzugsweise zwischen 20 bis 80°C liegt; und
id) mehrfaches Wiederholen der Schritte ib) und ic).

Das erfindungsgemäße Verfahren umfasst nach einer zweiten Alternative folgende Schritte:
iia) Herstellung einer Mischung aus feuerfestem Formgrundstoff und Harzkomponente, insbesondere bei Temperaturen von 10 bis 45°C, wobei bezogen auf die Formstoffmischung vorzugsweise größer 80 Gew.%, insbesondere größer 90 Gew.%, besonders bevorzugt größer 95 Gew.% feuerfesten Formgrundstoff und zwischen 0,1 Gew.% und 5,3 Gew.%, bevorzugt zwischen 0,3 Gew.% und 4,3 Gew.% und besonders bevorzugt zwischen 0,5 Gew.% und 3,1 Gew.% Harzkomponente bezogen auf den feuerfesten Formgrundstoff bzw. zwischen 0,1 Gew.% und 5 Gew.%, bevorzugt zwischen 0,3 Gew.% und 4 Gew.% und besonders bevorzugt zwischen 0,5 Gew.% und 3 Gew.%, bezogen auf die Formstoffmischung verwendet werden;
iib) schichtweise Ausbreitung der (losen) Mischung aus Harzkomponente und Formgrundstoff mit einer Schichtdicke von 0,03 mm bis 3 mm, vorzugsweise 0,03 bis 1,5 mm als Formgrundstoffschicht;
iic) Bedrucken ausgewählter Bereiche der ausgebreiteten Mischung aus Harzkomponente und Formgrundstoff mit Säure, wobei die Menge der Säure zwischen 0,1 Gew.% bis 3 Gew.%, bevorzugt zwischen 0,1 Gew.% und 2,5 Gew.% und besonders bevorzugt zwischen 0,1 Gew.% und 2 Gew.% bezogen auf die Formstoffmischung beträgt und die Temperatur des Druckkopfes vorzugsweise zwischen 20 bis 80°C liegt, und
iid) mehrfaches Wiederholen der Schritte iib) und iic).

Das erfindungsgemäße Verfahren umfasst nach einer dritten Alternative folgende Schritte:
Die Verfahrensschritte der ersten und zweiten Alternative wie oben, wobei jedoch nur der Formgrundstoff und etwaige Additive schichtweise ausgebreitet werden (als Formgrundstoffschicht) und Säure und Harzkomponente über zwei getrennte Druckköpfe zugegeben werden, alles jeweils in den Konzentrationen wie oben angegeben, wobei ggf. nur ein Druckkopf selektiv und der andere flächig ausbreitet.

Unter Formstoffmischung wird die Gesamtzusammensetzung enthaltend alle Komponenten verstanden und zwar unmittelbar vor der Aushärtung, aber nur soweit in dem entsprechenden Volumenabschnitt zumindest Harzkomponente, Säure und Formgrundstoff zugegen sind, so dass der Volumenabschnitt aushärten kann.

Volumenabschnitte in der Jobbox, in welchen die Säure oder die Harzkomponente fehlen, werden nicht der Formstoffmischung zugerechnet, sondern werden als Mischung aus feuerfestem Formgrundstoff und Harzkomponente oder Mischung aus feuerfestem Formgrundstoff und Säure bezeichnet. Diese Mischung kann jeweils auch weitere Komponenten enthalten (es fehlt aber entweder die Säure oder die Harzkomponente). Diese Mischung plus entweder Säure (im ersten Fall) oder plus Harzkomponente (im zweiten Fall) und einschließlich aller weiteren Bestandteile, die später in ihrer Gesamtheit die ausgehärtete Form bzw. den ausgehärteten Kern ergeben, unmittelbar vor der Aushärtung ist die Formstoffmischung.

Im Folgenden werden die einzelnen Komponenten beschrieben.

### (1) Feuerfester Formgrundstoff

Als feuerfeste Formgrundstoffe sind alle partikulären Feststoffe einsetzbar. Der feuerfeste Formgrundstoff weist einen rieselfähigen Zustand auf. Als feuerfester Formgrundstoff können für die Herstellung von Gießformen übliche und bekannte Materialien in reiner Form sowie Mischungen daraus verwendet werden. Geeignet sind beispielsweise Quarzsand, Zirkonsand oder Chromerzsand, Olivin, Vermiculit, Bauxit, Schamotte sowie künstlich hergestellte bzw. aus synthetischen Materialien erhältliche feuerfeste Formgrundstoffe (z.B. Mikrohohlkugeln).

Unter einem feuerfesten Formgrundstoff werden Stoffe verstanden, die einen hohen Schmelzpunkt (Schmelztemperatur) aufweisen. Vorzugsweise ist der Schmelzpunkt des feuerfesten Formgrundstoffs größer als 600°C, bevorzugt größer als 900°C, besonders bevorzugt größer als 1200°C und insbesondere bevorzugt größer als 1500°C.

Der Formgrundstoff macht vorzugsweise größer 80 Gew.%, insbesondere größer 90 Gew.%, besonders bevorzugt größer 95 Gew.% der Formstoffmischung aus.

Der mittlere Durchmesser der feuerfesten Formgrundstoffe liegt in der Regel zwischen 30 µm und 500 µm, bevorzugt zwischen 40 µm und 400 µm und besonders bevorzugt zwischen 50 µm und 250 µm. Die Partikelgröße lässt sich z.B. durch Siebung nach DIN ISO 3310 bestimmen.

### (2) Bindemittel

Das Bindemittel ist ein Mehrkomponentensystem umfassend zumindest die Harzkomponente sowie die Säure als Katalysator zur Aushärtung der Harzkomponente.

Die Komponenten werden nachfolgend genauer beschrieben.

### (2a) Harzkomponente

Die Harzkomponente umfasst zumindest folgende Bestandteile:
i) mehr als 5 Gew.%, bevorzugt mehr als 10 Gew.% und besonders bevorzugt mehr als 15 Gew.% sowie weniger als 50 Gew.%, bevorzugt weniger als 45 Gew.% und besonders bevorzugt weniger als 40 Gew.% monomeren Furfurylalkohol bezogen auf die Harzkomponente bestimmt mittels Gaschromatographie (siehe VDG-Merkblatt P70 "Bindemittelprüfung, Prüfung von flüssigen säurehärtbaren Furanharzen" 3. Ausgabe, April 1989);
ii) mehr als 15 Gew.%, bevorzugt mehr als 20 Gew.% und insbesondere mehr als 25 Gew.% sowie weniger als 90 Gew.%, bevorzugt weniger als 85 Gew.% und insbesondere weniger als 80 Gew.% sind ein Furanharz, bezogen auf die Harzkomponente.
   Das Furanharz ist ein Umsetzungsprodukt von einer Aldehyd-Verbindung, insbesondere Formaldehyd, mit Furfurylalkohol. Daneben können bei der Umsetzung von Aldehyd-Verbindung und Furfurylalkohol weitere Monomere umgesetzt werden, wie Monomere enthaltend Stickstoff, z.B. Harnstoff, Furfurylalkohol-Derivate und/oder Phenol-Verbindungen. Die Umsetzung erfolgt in Gegenwart eines Säurekatalysators mit vorzugsweise einem pKₛ-Wert bei 25°C von größer oder gleich 2,5, bevorzugt solche mit einem pKₛ-Wert von 2,7 bis 6 und besonders bevorzugt mit einem pKₛ-Wert von 3 bis 5. Bevorzugt werden Umsetzungsprodukte aus Furfurylalkohol und Formaldehyd eingesetzt, wobei das Molverhältnis von Furfurylalkohol und Formaldehyd größer oder gleich 1 ist, vorzugsweise liegt es zwischen 1:0,2 bis 1:0,9, bevorzugt zwischen 1:0,2 bis 1:0,8 und besonders bevorzugt zwischen 1:0,3 bis 1: 0,7. Dabei ist die Menge an eingesetztem Furfurylalkohol und Formaldehyd jeweils als Monomer in Summe größer 60 Gew.%, bevorzugt größer 70 Gew.% und besonders bevorzugt größer 80 Gew.% bezogen auf alle eingesetzten Monomere.
   Als Säurekatalysatoren für die Umsetzung von Furfurylalkohol und Formaldehyd werden schwache Säuren, Mischungen daraus sowie deren Salze mit vorzugsweise einem pKₛ-Wert bei 25°C von größer oder gleich 2,5, bevorzugt solche mit einem pKₛ-Wert von 2,7 bis 6 und besonders bevorzugt mit einem pKₛ-Wert von 3 bis 5 verwendet. Dazu gehören vorzugsweise organische Säuren wie beispielsweise Benzoesäure, Milchsäure, Adipinsäure, Citronensäure oder Salicylsäure. Beispielhaft sei als Metallsalz Zinkacetatgenannt.
   Die Art und Herstellung der oben beschriebenen Umsetzungsprodukte sind beispielsweise Gegenstand in der DE 202011110617 U1 sowie in der DE 102014002679 A1.
iii) Daneben können zusätzlich 0 bis 25 Gew.%, bevorzugt 1 bis 20 Gew.% und insbesondere 3 bis 15 Gew.%, bezogen auf die Harzkomponente, Polymere erhalten aus der Umsetzung von Aldehyd-Verbindungen, insbesondere Formaldehyd, mit Monomeren enthaltend Stickstoff und ggf. Furfurylalkohol oder Furfurylalkohol-Derivaten weiterer Bestandteil der Harzkomponente zugesetzt werden. Insbesondere sind dies Umsetzungsprodukte von Aldehyd-Verbindungen, insbesondere Formaldehyd, und Verbindungen enthaltend Stickstoff, bevorzugt Harnstoff, wobei das Molverhältnis von Harnstoff und Formaldehyd kleiner oder gleich 1 ist, vorzugsweise liegt es zwischen 1:1 bis 1:5, bevorzugt zwischen 1:1 bis 1:4 und besonders bevorzugt zwischen 1:1,2 bis 1:3.
   Als Säurekatalysatoren für die Umsetzung von Harnstoff und Formaldehyd werden starke Säuren, Mischungen daraus sowie deren Salze mit vorzugsweise einem pKₛ-Wert bei 25°C von kleiner oder gleich 2,5, bevorzugt solche mit einem pKₛ-Wert von 2,5 bis 3 und besonders bevorzugt mit einem pKₛ-Wert von 2 bis 0 verwendet. Dazu gehören vorzugsweise para-Toluolsulfonsäure oder Salze der Phosphorsäure wie Natriumphosphat.
   Die Verwendung von unter iii) beschriebenen Bestandteilen der Harzkomponente wirkt sich positiv auf die Entwicklung der Festigkeiten des durch schichtweisen Aufbau hergestellten Formkörpers aus und in einer bevorzugten Ausführung sind diese in den angegebenen Grenzen Bestandteil der Harzkomponente.
iv) Fakultativ können zusätzlich 0 Gew.% bis 25 Gew.%, bevorzugt 0 Gew.% bis 20 Gew.% und insbesondere 0 Gew.% bis 15 Gew.% bezogen auf die Harzkomponente Umsetzungsprodukte von Aldehyd-Verbindung, insbesondere Formaldehyd, und Phenol-Verbindungen, insbesondere Phenol selbst, als Polymere in Form von alkalisch katalysierten Resolharzen der Harzkomponente zugemischt sein.
v) Fakultativ können Plastifizierer oder Härtungsmoderatoren in Mengen von 0 Gew.% bis 25 Gew.%, bevorzugt von 0 Gew.% bis 20 Gew.% und insbesondere von 0,2 Gew.% bis 15 Gew.% bezogen auf die Harzkomponente, der Harzkomponente zugemischt werden;
vi) Fakultativ können Oberflächenmodifizierer in Mengen von 0 bis 5 Gew.%, bevorzugt zwischen 0,01 bis 2 Gew.% und besonders bevorzugt zwischen 0,05 bis 1 Gew.% bezogen auf die Harzkomponente, der Harzkomponente zugemischt werden.

Neben Furfurylalkohol selbst können Furfurylalkohol-Derivate wie 2,5-Bis(hydroxymethyl)furan, Methyl- oder Ethylether des 2,5-Bis(hydroxymethyl)furans oder 5-Hydroxymethylfurfural eingesetzt werden.

Als Aldehyde werden im Allgemeinen Aldehyde der Formel R-CHO, wobei R ein Wasserstoffatom oder ein Kohlenstoffatomrest mit vorzugsweise 1 bis 8, besonders bevorzugt 1 bis 3 Kohlenstoffatomen ist, verwendet.

Beispiele sind Formaldehyd z.B. in Form wässriger Lösungen oder polymer in Form von Trioxan oder Paraformaldehyd, Acetaldehyd, Propionaldehyd, Furfurylaldehyd (Furfural), Butyraldehyd, Glyoxal und deren Mischungen. Besonders bevorzugt sind Formaldehyd oder Mischungen enthaltend überwiegend (bezogen auf molare Menge der Aldehyde) Formaldehyd.

Als Verbindungen enthaltend Stickstoff sind beispielsweise Harnstoff-Derivate wie Harnstoff selbst, Melamin oder Ethylenharnstoff oder Amine wie Ammoniak und Triethylamin, Aminoalkohole wie Monoethanolamin oder 2-Amino-2-methyl-1-propanol geeignet. In einer besonders bevorzugten Ausführungsform werden Harnstoff, Triethylamin oder Monoethanolamin, insbesondere Harnstoff, verwendet.

Diese Verbindungen enthaltend Stickstoff können mit dem Furfurylalkohol oder dem Furfurylalkohol-Derivat und der Aldehyd-Verbindung direkt oder mit deren Vorkondensat zur Reaktion gebracht werden oder aber in einer bevorzugten Variante als eigenständiges Vorkondensat, insbesondere in Form von Harnstoff-Derivaten, wie bevorzugt Harnstoff selbst, kondensiert mit einem Aldehyd, bevorzugt Formaldehyd, und optional kondensiert mit bevorzugt Furfurylalkohol oder einem Furfurylalkohol-Derivat zugesetzt werden.

Die Menge an Verbindungen enthaltend Stickstoff wird so gewählt, dass der Gesamt-Stickstoffgehalt (N) der Harzkomponente, bestimmt nach Kjeldahl (nach DIN 16916-02-B2 bzw. VDG-Merkblatt P70), kleiner 5 Gew.%, bevorzugt kleiner 3,5 Gew.% und besonders bevorzugt kleiner 2 Gew.% beträgt, damit durch die Anwesenheit von Stickstoff bedingte Oberflächenfehler am späteren Gussteil reduziert oder vermieden werden.

Geeignete Phenol-Verbindungen sind durch einen oder mehrere aromatische Ringe und zumindest eine Hydroxy-Substitution an diesen gekennzeichnet. Beispiele sind neben Phenol selbst, substituierte Phenole, wie z.B. Kresole oder Nonylphenol, 1,2-Dihydroxybenzol (Brenzcatechin), 1,3-Dihydroxybenzol (Resorcin), Cashewnussschalenöl, d.h. eine Mischung aus Cardanol und Cardol, oder 1,4-Dihydroxybenzol (Hydrochinon) oder phenolische Verbindungen wie z.B. Bisphenol A oder Mischungen daraus. Besonders bevorzugt ist Phenol als phenolische Komponente.

Diese Phenole können mit der Furfurylalkohol- und der Aldehyd-Verbindung direkt oder mit deren Vorkondensat zur Reaktion gebracht werden. Des Weiteren können Umsetzungsprodukte von Phenolen und Formaldehyd in Form von Resolharzen, die unter alkalischen Bedingungen hergestellt werden, der Harzkomponente zugesetzt werden.

Der Gesamtgehalt an freiem Phenol in der Harzkomponente beträgt vorzugsweise kleiner 1 Gew.% (bestimmt mittels Gaschromatographie).

Zur weiteren Verdünnung der oben beschriebenen Harzkomponente in einen für den Verdruckprozess nötigen Viskositätsbereich von 2 mPas bis 70 mPas, bevorzugt von 5 mPas bis 60 mPas und besonders bevorzugt von 5 mPas bis 50 mPas (Brookfield, bei 25°C) können der Harzkomponente weitere Lösungsmittel wie Wasser oder organische Lösungsmittel, die nicht Furfurylalkohol sind, umfassend 1 bis 25 Kohlenstoffatome, z.B. Alkohole wie Ethanol, Propanol, 5-Hydroxy-1,3-dioxan, 4-Hydroxymethyl-1,3-dioxolan oder Tetrahydrofurfurylalkohol, Oxetane wie Trimethylolpropanoxetan, Ketone wie Aceton oder Ester wie Triacetin und Propylencarbonat beigemischt werden. Besonders bevorzugt sind dabei Wasser und Ethanol sowie Mischungen daraus.

Die Menge an der Harzkomponente zugesetztem Lösungsmittel(n) wird dabei so gewählt, dass der Gesamtwassergehalt der Harzkomponente (bestimmt mittels Karl-Fischer-Titration nach DIN 51777) zwischen 5 Gew.% und weniger als 40 Gew.%, bevorzugt 5 Gew.% und weniger als 35 Gew.% und insbesondere 7 Gew.% und weniger als 30 Gew.% und die Menge an weiteren Lösungsmitteln, die nicht Furfurylalkohol oder Wasser sind, zwischen 0 Gew.% bis 30 Gew.%, bevorzugt 0,5 Gew.% bis 25 Gew.% und insbesondere 1 Gew.% bis 20 Gew.% jeweils bezogen auf die Harzkomponente beträgt.

Des Weiteren kann die Harzkomponente weitere Zusätze wie Härtungsmoderatoren oder Plastifizierer enthalten. Dazu gehören beispielsweise Diole oder Polyole mit 2 bis 12 Kohlenstoffatomen, Fettsäuren, Silicone oder Phthalate, die in Mengen von 0 Gew.% bis 25 Gew.%, bevorzugt von 0 Gew.% bis 20 Gew.% und besonders bevorzugt in Mengen von 0,2 bis 15 Gew.% bezogen auf die Harzkomponente eingesetzt werden. Besonders bevorzugt sind hierbei Glykole wie Ethylenglykol, sowie Fettsäuren wie Ölsäure.

Neben den bereits erwähnten Bestandteilen kann die Harzkomponente weitere geeignete Additive, wie Oberflächenmodifizierer enthalten, dazu gehören z. B. Silane (z.B. gemäß EP 1137500 B1). Geeignete Silane sind beispielsweise Aminosilane, Epoxysilane, Mercaptosilane, Hydroxysilane und Ureidosilane, wie gamma-Hydroxypropyltrimethoxysilan, gamma-Aminopropyltrimethoxysilan, 3-Ureido-propyltriethoxysilan, gamma-Mercaptopropyltrimethoxysilan, gamma-Glycidoxypropyltrimethoxysilan, beta-(3,4-Epoxycyclohexyl)trimethoxysilan und N-beta-(Aminoethyl)-gamma-aminopropyltrimethoxysilan oder weithin Polysiloxane. Die Zugabemengen der Silane liegen insbesondere zwischen 0 Gew.% bis 5 Gew.%, bevorzugt zwischen 0,01 Gew.% bis 2 Gew.% und besonders bevorzugt zwischen 0,05 Gew.% bis 1 Gew.% bezogen jeweils auf die Harzkomponente.

Als Druckmedium weist die Harzkomponente, wie oben bereits beschrieben, eine Viskosität (Brookfield, 25°C, Spindel 21, DIN EN ISO 2555) von 2 mPas bis 70 mPas , bevorzugt von 5 mPas bis 60 mPas und besonders bevorzugt von 5 mPas bis 50 mPas jeweils bei 25°C auf. Auch unabhängig hiervon beträgt die Oberflächenspannung von 10 mN/m bis 70 mN/m, bevorzugt von 15 mN/m bis 60 mN/m, besonders bevorzugt von 15 mN/m bis 55 mN/m und insbesondere bevorzugt von 20 mN/m bis 50 mN/m, bestimmt mit der Plattenmethode nach Wilhelmy mit einem Force Tensiometer K100 von Krüss, gemessen bei 20°C. Zur Absenkung der Oberflächenspannung kann die Harzkomponente zusätzlich mit oberflächenaktiven Substanzen wie kationischen, anionischen oder nichtionischen Tensiden modifiziert werden, z.B. mit Carboxylaten, Sulfonaten oder Sulfaten wie Natrium-2-ethylhexylsulfat als anionische Tenside, quartäre Ammoniumverbindungen wie Esterquats als kationische Tenside oder Alkohole, Ether oder Ethoxylate wie Polyalkylenglykolether als nichtionische Tenside.

Dabei sei erwähnt, dass die Drucktemperatur, d.h. die Temperatur des Druckkopfes, nicht auf Raumtemperatur beschränkt, sondern zwischen 20°C bis 80°C, insbesondere bei 20 bis 40°C, liegen kann und dadurch auch höherviskose Bindemittel problemlos verdruckt werden können.

Auch unabhängig hiervon beträgt die Temperatur der Harzkomponente beim Verdrucken zwischen 15°C und 80°C, insbesondere 20 bis 40°C.

Die Menge der Harzkomponente in der Formstoffmischung liegt zwischen 0,1 Gew.% und 5 Gew.%, bevorzugt zwischen 0,3 Gew.% und 4 Gew.% und besonders bevorzugt zwischen 0,5 Gew.% und 3 Gew.% bezogen auf die Formstoffmischung.

### (2b) Säure

Als Katalysatoren für die Aushärtung der Harzkomponente können übliche Säuren für die Gießereiformenherstellung oder Mischungen daraus mit einem pKₛ-Wert bei 25°C von kleiner 4, vorzugsweise mit einem pKₛ-Wert kleiner oder gleich 3,9, bevorzugt mit einem pKₛ-Wert kleiner 3 und besonders bevorzugt mit einem pKₛ-Wert kleiner 1,5 verwendet werden, wie beispielsweise organische Säuren wie *para-*Toluolsulfonsäure, Xylolsulfonsäure, Benzolsulfonsäure, Methansulfonsäure oder Milchsäure sowie anorganische Säuren wie Schwefelsäure oder Phosphorsäure oder Mischungen aus diversen organischen und anorganischen Säuren.

Besonders bevorzugt sind als Säuren wässrige para-Toluolsulfonsäure, Schwefelsäure und/oder wässrige Milchsäure sowie Mischungen daraus.

Die Menge der Säure in der Formstoffmischung liegt zwischen 0,1 Gew.% bis 3 Gew.%, bevorzugt zwischen 0,1 Gew.% und 2,5 Gew.% und besonders bevorzugt zwischen 0,1 Gew.% und 2 Gew.% bezogen auf die Formstoffmischung.

Weiterhin kann die Säure weitere Additive zur Optimierung der sandtechnischen Eigenschaften aufweisen. Dazu gehören beispielsweise Härtungsmoderatoren wie Glykole, besonders Ethylenglykol oder Alkohole wie Ethanol, die in Mengen von 0 Gew.% bis 15 Gew.%, bevorzugt von 0 Gew.% bis 10 Gew.% und insbesondere von 0 Gew.% bis 7 Gew.% bezogen auf die Säure eingesetzt werden.

### (3) Formgrundstoffadditive

Optional können der Formstoffmischung organische oder mineralische Additive, wie Eisenoxide, Silikate, Aluminate, Mikrohohlkugeln, Holzmehle oder Stärken sowie Mischungen daraus zur Gussfehlervermeidung in einer Menge von kleiner 10 Gew.%, bevorzugt in Mengen von kleiner 7 Gew.% und besonders bevorzugt in Mengen von kleiner 5 Gew.% zugesetzt werden (bezogen jeweils auf die Formstoffmischung).

Die Erfindung wird im Weiteren anhand von Versuchsbeispielen erläutert ohne auf diese beschränkt zu sein.

### Beispiele

### Herstellung eines Furanharzes - Harz 1

Furfurylalkohol (79 Gew.%) Paraformaldehyd 92% (12,1 Gew.%), Adipinsäure (4,8 Gew.%), Milchsäure 80% (0,7 Gew.%), Harnstoff (1,7 Gew.%), Wasser (1,7 Gew.%)
2370 g Furfurylalkohol, 363 g Paraformaldehyd und 144 g Adipinsäure werden unter Rührung vorgelegt. Anschließend werden 21 g Milchsäure 80% zugegeben und der Reaktionsansatz auf 110°C aufgeheizt. Nach etwa 240 min wird auf 100°C abgekühlt und bei dieser Temperatur weitere 120 min gerührt. Anschließend wird der Reaktionsansatz auf 80°C gekühlt und 51 g Harnstoff und 51 g Wasser hinzugegeben.

| Gehalt an Umsetzungsprodukt aus | |
|---|---|
| Furfurylalkohol, Formaldehyd und Harnstoff*: | 67 Gew.% |
| Gehalt an monomerem Furfurylalkohol: | 22 Gew.% |
| Gehalt an Wasser: | 11 Gew.% |
| Gehalt an freiem Formaldehyd: | 0,3 Gew.% |
| Gehalt an Stickstoff: | 0,8 Gew.% |

| | |
|---|---|
| *Bestandteil gemäß Beschreibung der Harzkomponente nach Abschnitt ii) | |

### Umsetzungsprodukt aus Formaldehyd und Harnstoff - Harz 2

Als Umsetzungsprodukt aus Formaldehyd und Harnstoff wurde ein handelsübliches Produkt der Firma Hexion verwendet.

| Borden ^{™} CPU 16147 von Hexion | |
|---|---|
| Gehalt an Umsetzungsprodukt aus Formaldehyd und Harnstoff**: | 65 Gew.% |
| Gehalt an Wasser: | 30 Gew.% |
| Gehalt an freiem Formaldehyd: | 0,3 Gew.% |
| Gehalt an Stickstoff: | 23 Gew.% |

Die Zusammensetzungen der im Folgenden auf ihre Neigung zu Sandanhaftungen untersuchten Harzkomponenten sind **Tabelle 1** beschrieben.
**Bestandteil gemäß Beschreibung der Harzkomponente nach Abschnitt iii)

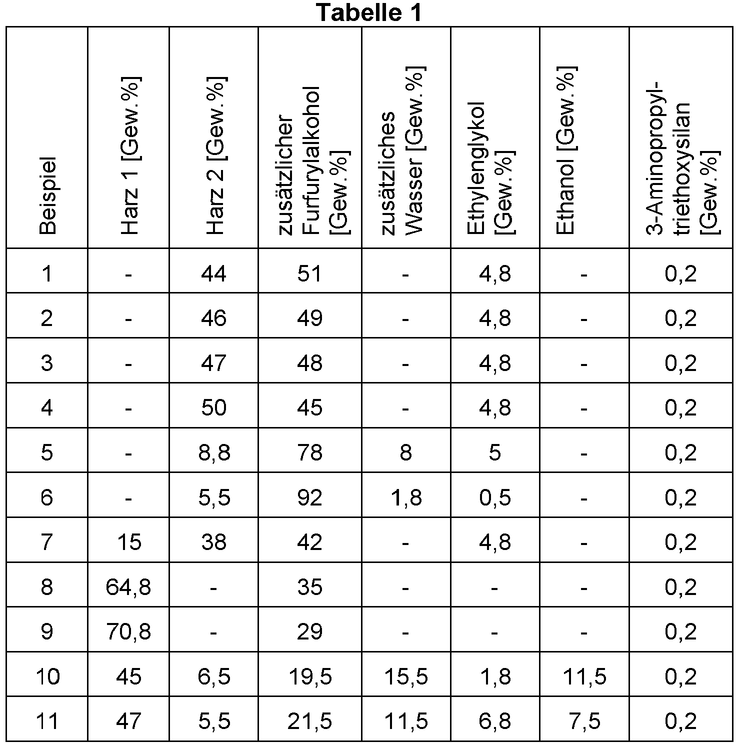

### Untersuchung der Reduzierung von Anhaftungen

Zur Untersuchung der Reduzierung von Anhaftungen einer Mischung aus Säure und Formgrundstoff an der ausgehärteten Formstoffmischung beinhaltend alle Bindemittelkomponenten, wurden in der Schüssel eines Flügelmischers der Firma Beba 3 kg Quarzsand H32 als Formgrundstoff und 0,4 Gew.% bezogen auf den Formgrundstoff 65%ige para-Toluolsulfonsäure als Säure 1 min bei 75 U/min unter Laborbedingungen (Raumtemperatur = Sandtemperatur = 20°C, Luftfeuchte = 30%) intensiv gemischt. Diese Mischung wurde anschließend in einer Holzform mit den Abmessungen 400 mm x 230 mm x 22,5 mm verdichtet und dann punktuell mit 0,5 g Harzkomponente beträufelt. Zur Überprüfung der Reproduzierbarkeit wurde so an insgesamt acht Stellen auf der Oberfläche der Mischung aus Säure und Formgrundstoff verfahren. Die so präparierte Holzform wurde 24 h bei Raumtemperatur gelagert und das Bindemittel ausgehärtet. Anschließend wurden die gebildeten Kerne, bestehend aus Formgrundstoff-Säure-Harzkomponente, aus der losen Mischung aus Säure und Formgrundstoff entnommen und gravimetrisch ausgewertet.

Mit diesem Experiment konnte gezeigt werden, dass die Sandanhaftungen durch Verwendung eines erfindungsgemäßen Bindemittels signifikant reduziert werden können (**Tabelle 2**). Dies ist ein wesentlicher Vorteil im Vergleich zu Bindersystemen, die im Stand der Technik beschrieben werden.

Bewertung erfolgte mit Schulnoten von 1 (sehr wenige Sandanhaftungen) bis 6 (sehr viele Sandanhaftungen)

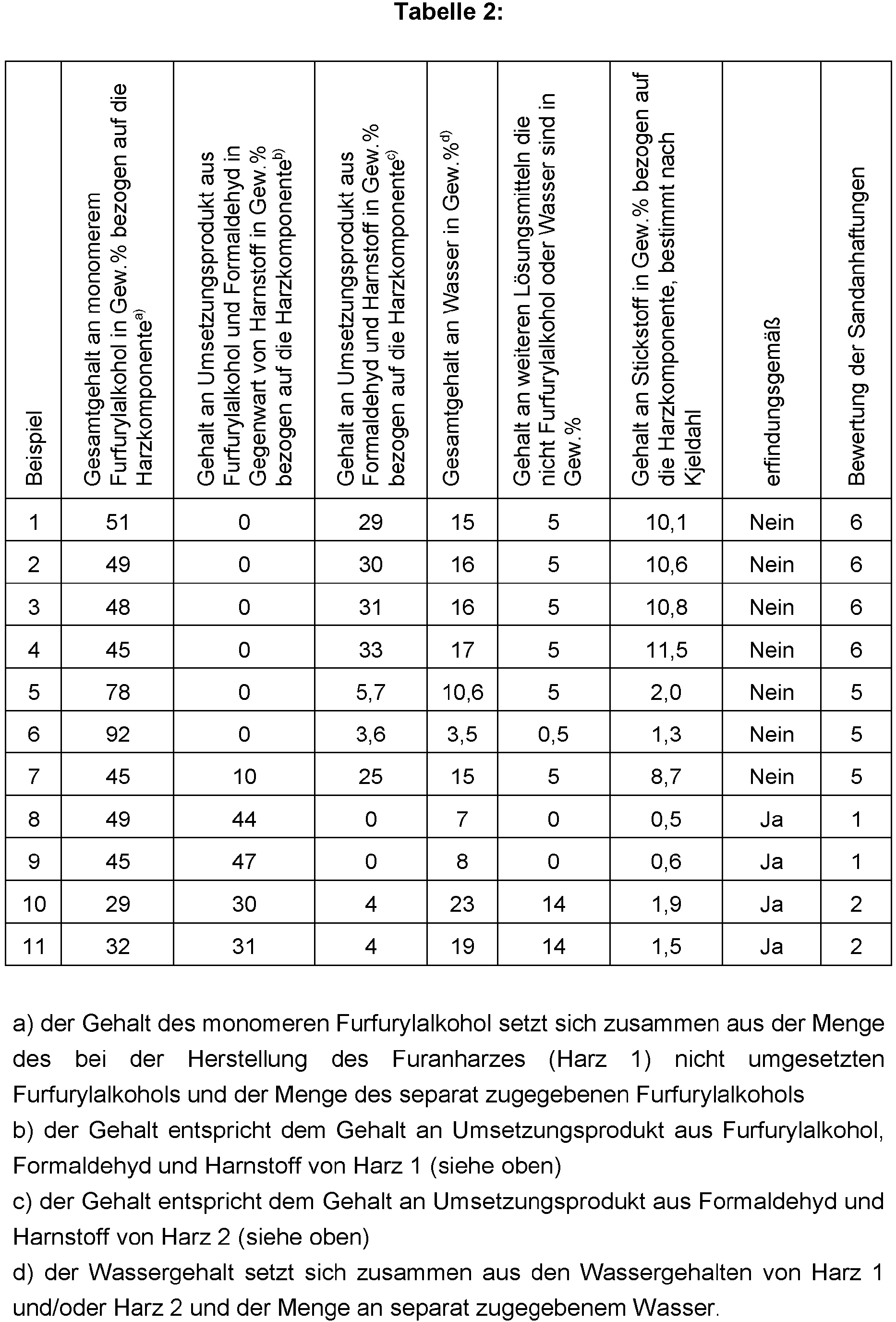

## Patentansprüche

1. Verfahren zum schichtweisen Aufbau von ausgehärteten dreidimensionalen Formkörpern, wobei ein feuerfester Formgrundstoff schichtweise zur Herstellung einer Formgrundstoffschicht ausgebracht wird und zumindest eine Komponente des Bindemittels getrennt vom feuerfesten Formgrundstoff selektiv über einen Druckkopf schichtweise auf die Formgrundstoffschicht aufgebracht wird und
das Bindemittel zumindest zwei Komponenten umfasst:
a) eine Harzkomponente umfassend mehr als 15 Gew.% und weniger als 90 Gew.% eines Furanharzes als Umsetzungsprodukt von zumindest Aldehyd-Verbindung und Furfurylalkohol und fakultativ Verbindungen enthaltend Stickstoff und/oder Phenol-Verbindungen, wobei der Stickstoffgehalt der Harzkomponente kleiner 5 Gew.% beträgt und wobei die Harzkomponente mehr als 5 Gew.% und weniger als 50 Gew.% monomeren Furfurylalkohol, bezogen auf die Harzkomponente, enthält, und
b) eine Säure als Katalysatorkomponente,
und die Abfolge von Ausbringen von zumindest einer Formgrundstoffschicht und Aufbringen von zumindest einer Komponente des Bindemittels Schicht für Schicht wiederholt werden.

2. Verfahren gemäß Anspruch 1, wobei entweder
(A) dem schichtweise ausgebrachten feuerfesten Formgrundstoff die Säure zugesetzt ist, so dass zumindest feuerfester Formgrundstoff und Säure die Formgrundstoffschicht bilden und die Harzkomponente über den Druckkopf schichtweise auf die Formgrundstoffschicht aufgebracht wird, oder
(B) dem schichtweise ausgebrachten feuerfesten Formgrundstoff die Harzkomponente zugesetzt ist, so dass zumindest feuerfester Formgrundstoff und Harzkomponente die Formgrundstoffschicht bilden und die Säure über den Druckkopf schichtweise auf die Formgrundstoffschicht aufgebracht wird.

3. Verfahren gemäß Anspruch 1 oder 2, wobei die Harzkomponente mehr als 5 Gew.%, bevorzugt mehr als 10 Gew.% und besonders bevorzugt mehr als 15 Gew.% sowie weniger als 50 Gew.%, bevorzugt weniger als 45 Gew.% und besonders bevorzugt weniger als 40 Gew.% monomeren Furfurylalkohol enthält.

4. Verfahren gemäß einem der vorhergehenden Ansprüche, wobei die Harzkomponente mehr als 20 Gew.%, bevorzugt mehr als 25 Gew.% sowie weniger als 85 Gew.% und insbesondere weniger als 80 Gew.% des Furanharzes enthält.

5. Verfahren gemäß einem der vorhergehenden Ansprüche, wobei das Furanharz bevorzugt ein Umsetzungsprodukt aus Furfurylalkohol und Formaldehyd sowie gegebenenfalls Verbindungen enthaltend Stickstoff wie bevorzugt Harnstoff ist, bevorzugt mit einem Molverhältnis von Furfurylalkohol zu Formaldehyd von größer oder gleich 1, vorzugsweise von 1:0,2 bis 1:0,9, bevorzugt von 1:0,2 bis 1:0,8 und besonders bevorzugt von 1:0,3 bis 1:0,7.

6. Verfahren gemäß einem der vorhergehenden Ansprüche, wobei der Säurekatalysator für die Herstellung des Umsetzungsproduktes aus Formaldehyd und Furfurylalkohol eine Säure mit einem pKs-Wert von 2,7 bis 6, vorzugsweise mit einem pKs-Wert von 3 bis 5, und besonders bevorzugt Milchsäure oder Adipinsäure ist sowie Kombinationen davon.

7. Verfahren gemäß einem der vorhergehenden Ansprüche, wobei die Harzkomponente 0 bis 25 Gew.%, bevorzugt 1 bis 20 Gew.% und insbesondere bevorzugt 3 bis 15 Gew.% Umsetzungsprodukte aus Formaldehyd und Harnstoff enthält.

8. Verfahren gemäß einem der vorhergehenden Ansprüche, wobei die Verbindungen enthaltend Stickstoff Harnstoff ist und/oder die Menge an Verbindungen enthaltend Stickstoff so gewählt ist, dass der Gesamtstickstoffgehalt der Harzkomponente kleiner 5 Gew.%, bevorzugt kleiner 3,5 Gew.% und besonders bevorzugt kleiner 2 Gew.% beträgt.

9. Verfahren gemäß einem der vorhergehenden Ansprüche, wobei der Gesamtwassergehalt der Harzkomponente höchstens 40 Gew.%, bevorzugt höchstens 35 Gew.% und besonders bevorzugt höchstens 30 Gew.% beträgt.

10. Verfahren gemäß einem der vorhergehenden Ansprüche, wobei die Harzkomponente zusätzlich ein organisches Lösungsmittel, das nicht Furfurylalkohol ist, mit 1 bis 25 Kohlenstoffatomen umfasst, bevorzugt Alkohole, insbesondere Ethanol, wobei die Menge an organischem Lösungsmittel eine Menge von 30 Gew.%, bevorzugt eine Menge von 25 Gew.% und besonders bevorzugt eine Menge von 20 Gew.% nicht übersteigt.

11. Verfahren gemäß einem der vorhergehenden Ansprüche, wobei die Harzkomponente eine Viskosität (DIN EN ISO 2555 , Brookfield, 25°C) von 2 mPas bis 70 mPas , bevorzugt von 5 mPas bis 60 mPas und besonders bevorzugt von 5 mPas bis 50 mPas bei 25°C aufweist.

12. Verfahren nach einem der vorhergehenden Ansprüche, wobei die Harzkomponente bei 20°C eine Oberflächenspannung von 10 mN/m bis 70 mN/m, bevorzugt von 15 mN/m bis 60 mN/m, besonders bevorzugt von 15 mN/m bis 55 mN/m und insbesondere bevorzugt von 20 mN/m bis 50 mN/m aufweist, bestimmt mit der Plattenmethode nach Wilhelmy mit einem Force Tensiometer K100 von Krüss bei 20°C.

13. Verfahren gemäß einem der vorhergehenden Ansprüche, wobei die Menge der Harzkomponente zwischen 0,1 Gew.% und 5,3 Gew.%, bevorzugt zwischen 0,3 Gew.% und 4,3 Gew.% und besonders bevorzugt zwischen 0,5 Gew.% und 3,1 Gew.% , bezogen auf den feuerfesten Formgrundstoff bzw. zwischen 0,1 Gew.% und 5 Gew.%, bevorzugt zwischen 0,3 Gew.% und 4 Gew.% und besonders bevorzugt zwischen 0,5 Gew.% und 3 Gew.%, bezogen auf die Formstoffmischung beträgt.

14. Verfahren gemäß einem der vorhergehenden Ansprüche, wobei das Verfahren weiterhin **gekennzeichnet ist durch** eines oder mehrere der folgenden Merkmale:
a) die Säure zur Aushärtung der Harzkomponente ist eine organische oder anorganische Säure oder eine Mischung daraus mit einem pKs-Wert bei 25°C von kleiner 4, vorzugsweise mit einem pKs-Wert kleiner oder gleich 3,9, bevorzugt mit einem pKs-Wert kleiner 3 und besonders bevorzugt mit einem pKs-Wert kleiner 1,5;
b) die Säurekomponente des Bindemittels ist para-Toluolsulfonsäure, Schwefelsäure oder Milchsäure oder eine Mischung daraus;
c) die Menge der Säure beträgt zwischen 0,1 Gew.% bis 3,1 Gew.%, bevorzugt zwischen 0,1 Gew.% und 2,6 Gew.% und besonders bevorzugt zwischen 0,1 Gew.% und 2,1 Gew.% Säure, bezogen auf den feuerfesten Formgrundstoff bzw. zwischen 0,1 Gew.% bis 3 Gew.%, bevorzugt zwischen 0,1 Gew.% und 2,5 Gew.% und besonders bevorzugt zwischen 0,1 Gew.% und 2 Gew.%, bezogen auf die Formstoffmischung.

15. Verfahren gemäß einem der vorhergehenden Ansprüche, wobei das Verfahren weiterhin **gekennzeichnet ist durch** eines oder mehrere der folgenden Merkmale:
a) der feuerfeste Formgrundstoff umfasst einen oder mehrere Bestandteile der Gruppe bestehend aus Quarzsand, Zirkonsand, Chromerzsand, Olivin, Vermiculit, Bauxit, Schamotte, Glasperlen, Glasgranulat, Aluminiumsilikatmikrohohlkugeln und deren Mischungen;
b) der feuerfeste Formgrundstoff weist einen mittleren Partikeldurchmesser von 30 µm bis 500 µm, bevorzugt zwischen 40 µm und 400 µm und besonders bevorzugt zwischen 50 µm und 250 µm auf;
c) der feuerfeste Formgrundstoff wird zu größer 80 Gew.%, bevorzugt größer 90 Gew.% und besonders bevorzugt größer 95 Gew.%, bezogen auf die Formstoffmischung eingesetzt.

16. Verfahren gemäß einem der vorhergehenden Ansprüche, wobei dem schichtweise ausgebrachten feuerfesten Formgrundstoff die Säure zugesetzt ist, wobei die Mischung aus Säure und Formgrundstoff vorzugsweise bei 10°C bis 45°C hergestellt ist, und die Schichtdicke der Mischung aus Säure und Formgrundstoff 0,03 mm bis 3 mm, vorzugsweise 0,03 mm bis 1,5 mm beträgt bevor ausgewählte Bereiche der Mischung aus Säure und Formgrundstoff selektiv mit der Harzkomponente bedruckt werden.

17. Verfahren nach zumindest einem der vorhergehenden Ansprüche umfassend weiterhin die folgenden Schritte:
i) Härtung des Körpers nach Beendigung des schichtweisen Aufbaus in einem Ofen oder mittels Mikrowelle und nachfolgend
ii) Entfernen der nicht bedruckten Mischung aus Säure- oder Harzkomponente und Formgrundstoff von der zumindest teilgehärteten Gießform.

18. Verfahren nach zumindest einem der vorhergehenden Ansprüche, wobei das Verfahren weiterhin **gekennzeichnet ist durch** eines oder mehrere der folgenden Merkmale:
a) der Druckkopf weist eine Vielzahl von Düsen auf und die Düsen sind vorzugsweise einzeln selektiv ansteuerbar, wobei der Druckkopf, insbesondere ein Drop-on-Demand Druckkopf mit Bubble-Jet oder Piezo-Technik ist;
b) der Druckkopf ist zumindest in einer Ebene von einem Computer gesteuert bewegbar und die Düsen tragen zumindest eine Komponente schichtweise auf und/oder der Druckkopf ist beheizbar;
c) die Temperatur des Druckkopfes beträgt zwischen 20°C bis 80°C.

19. Form oder Kern herstellbar nach dem Verfahren nach zumindest einem der vorhergehenden Ansprüche für den Metallguss, insbesondere den Eisen-, Stahl-, Kupfer- oder Aluminium-Guss.

## Claims

1. A method for the layer-by-layer construction of cured three-dimensional shaped bodies, wherein a refractory basic mold material is discharged layer-by-layer to produce a basic mold material layer, and at least one component of the binder is selectively applied by a printhead layer-by-layer to the basic mold material layer separate from the refractory basic mold material, and
the binder comprises at least two components:
a) a resin component comprising more than 15% by weight and less than 90% by weight a furane resin as a reaction product from at least an aldehyde compound and furfuryl alcohol, and optionally compounds containing nitrogen and/or phenol compounds, wherein the nitrogen content of the resin component is less than 5% by weight, and wherein the resin component comprises more than 5% by weight and less than 50% by weight monomer furfuryl alcohol, relative to the resin component, and
b) an acid as a catalyst component,
and the sequence of discharging at least one basic mold material layer and applying at least one component of the binder layer is repeated step-by-step.

2. The method according to claim 1, wherein either
(A) the refractory basic mold material is discharged layer-by-layer with the acid being added so that at least refractory basic mold material and acid form the basic mold material layer, and the resin component is applied layer-by-layer by the printhead to the basic mold material layer, or
(B) the refractory basic mold material is discharged layer-by-layer with the resin component being added so that at least refractory basic mold material and resin component form the basic mold material layer, and the acid is applied layer-by-layer by the printhead to the basic mold material layer.

3. The method according to claim 1 and 2, wherein the resin component contains more than 5% by weight, preferably more than 10% by weight and particularly preferably more than 15% by weight, as well as less than 50% by weight, preferably less than 45% by weight and particularly preferably less than 40% by weight monomer furfuryl alcohol.

4. The method according to one of the preceding claims, wherein the resin component contains more than 20% by weight and preferably more than 25% by weight, as well as less than 85% by weight and in particular less than 80% by weight of the furane resin.

5. The method according to one of the preceding claims, wherein the furane resin is preferably a reaction product from furfuryl alcohol and formaldehyde, as well as possibly compounds containing nitrogen such as preferably urea, preferably with a molar ratio of furfuryl alcohol to formaldehyde greater than or equal to 1, preferably 1:0.2 to 1:0.9, preferably 1:0.2 to 1:0.8, and particularly preferably 1:0.3 to 1:0.7.

6. The method according to one of the preceding claims, wherein the acid catalyst for the production of the reaction product from formaldehyde and furfuryl alcohol is an acid with a pKₐ value of 2.7 to 6, preferably with a pKₐ value of 3 to 5, and particularly preferably lactic acid or adipic acid, as well as combinations thereof.

7. The method according to one of the preceding claims, wherein the resin component contains 0 to 25% by weight, preferably 1 to 20% by weight, and in particular preferably 3 to 15% by weight reaction products of formaldehyde and urea.

8. The method according to one of the preceding claims, wherein the compounds containing nitrogen are urea, and/or the amount of compounds containing nitrogen is chosen such that the overall amount of nitrogen in the resin component is less than 5% by weight, preferably less than 3.5% by weight and particularly preferably less than 2% by weight.

9. The method according to one of the preceding claims, wherein the overall amount of water in the resin component is at most 40% by weight, preferably at most 35% by weight, and particularly preferably at most 30% by weight.

10. The method according to one of the preceding claims, wherein the resin component additionally comprises an organic solvent that is not furfuryl alcohol with 1 to 25 carbon atoms, preferably alcohols, in particular ethanol, wherein the amount of organic solvent does not exceed an amount of 30% by weight, preferably an amount of 25% by weight, and particularly preferably an amount of 20% by weight.

11. The method according to one of the preceding claims, wherein the resin component has a viscosity (DIN EN ISO 2555, Brookfield, 25°C) of 2 mPas to 70 mPas, preferably 5 mPas to 60 mPas and particularly preferably 5 mPas to 50 mPas at 25°C.

12. The method according to one of the preceding claims, wherein the resin component at 20°C has a surface tension from 10 mN/m to 70 mN/m, preferably from 15 mN/m to 60 mN/m, particularly preferably from 15 mN/m to 55 mN/m and especially preferably from 20 mN/m to 50 mN/m, determined by the Wilhelmy plate method with a Krüss K100 force tensiometer at 20°C.

13. The method according to one of the preceding claims, wherein the amount of the resin component is between 0.1% by weight and 5.3% by weight, preferably between 0.3% by weight and 4.3% by weight, and particularly preferably between 0.5% and 3.1% by weight, relative to the refractory basic mold material, or respectively between 0.1% by weight and 5% by weight, preferably between 0.3% by weight and 4% by weight, and particularly preferably between 0.5% by weight and 3% by weight, relative to the mold material mixture.

14. The method according to one of the preceding claims, wherein the method is further **characterised by** one or more of the following features:
a) the acid used for curing the resin component is an organic or inorganic acid, or a mixture thereof, with a pKₐ value at 25°C of less than 4, preferably with a pKₐ value less than or equal to 3.9, preferably with a pKₐ value less than 3, and particularly preferably within a pKₐ value less than 1.5;
b) the acid component of the binder is para-toluenesulfonic acid, sulfuric acid, or lactic acid, or a mixture thereof;
c) the amount of the acid is between 0.1% by weight to 3.1% by weight, preferably between 0.1% by weight and 2.6% by weight, and particularly preferably between 0.1% and 2.1% by weight acid, relative to the refractory basic mold material, or respectively between 0.1% by weight to 3% by weight, preferably between 0.1% by weight and 2.5% by weight, and particularly preferably between 0.1% by weight and 2% by weight, relative to the mold material mixture.

15. The method according to one of the preceding claims, wherein method is further **characterised by** one or more of the following features:
a) the refractory basic mold material comprises one or more constituents of the group consisting of quartz sand, zirconium sand, chrome ore sand, olivine, vermiculite, bauxite, fireclay, glass pearls, glass granules, aluminum silicate microspheres and mixtures thereof;
b) the refractory basic mold material has an average particle diameter of 30 µm to 500 µm, preferably between 40 µm and 400 µm, and particularly preferably between 50 µm and 250 µm;
c) the refractory basic mold material is used at more than 80% by weight, preferably more than 90% by weight, and particularly preferably more than 95% by weight relative to the mold material mixture.

16. The method according to one of the preceding claims, wherein the acid is added to the refractory basic mold material discharged layer-by-layer, wherein the mixture is produced from acid and basic mold material preferably at 10°C to 45°C, and the layer thickness of the mixture consisting of acid and basic mold material is 0.03 mm to 3 mm, preferably 0.03 mm to 1.5 mm, before selected regions of the mixture consisting of acid and basic mold material are selectively printed with the resin component.

17. The method according to at least one of the preceding claims, comprising moreover the following steps:
i) after termination of layer-by-layer construction, curing the body in an oven or by microwaving, and then
ii) removing the unprinted mixture consisting of the acid or resin component and basic molding material from the at least partially cured casting mold.

18. The method according to at least one of the preceding claims, wherein the method is further **characterised by** one or more of the following features:
a) the printhead has a plurality of nozzles, and the nozzles are preferably selectively controllable individually, wherein the printhead is in particular a drop-on-demand printhead with a bubble jet or piezo system;
b) the printhead is movably controlled by a computer, at least in one plane, and the nozzles apply at least one component layer-by-layer, and/or the printhead is heatable;
c) the temperature of the printhead is between 20°C to 80°C.

19. A mold or core producible according to the method according to at least one of the preceding claims for metal casting, in particular iron, steel, copper or aluminum casting.

## Revendications

1. Procédé de construction stratifiée de corps façonnés durcis en trois dimensions, dans lequel une matière de base de moulage réfractaire est étalée de manière stratifiée pour la fabrication d'une couche de matière de base de moulage et au moins un composant du liant est appliqué sélectivement par le biais d'une tête d'impression de manière stratifiée sur la couche de matière de base de moulage séparément de la matière de base de moulage réfractaire et le liant comprend au moins deux composants :
a) un composant de résine contenant plus de 15 % en poids et moins de 90 % en poids d'une résine de furane en tant que produit de conversion d'au moins un composé aldéhyde et d'un alcool furfurylique et facultativement de composés contenant de l'azote et/ou de composés phénoliques, la teneur en azote du composant de résine étant inférieure à 5 % en poids et le composant de résine contenant plus de 5 % en poids et moins de 50 % en poids d'alcool furfurylique monomérique, par rapport au composant de résine, et
b) un acide en tant que composant catalytique,
et la séquence d'étalement d'au moins une couche de matière de base de moulage et d'application d'au moins un composant du liant est répétée couche par couche.

2. Procédé selon la revendication 1, dans lequel soit
(A) l'acide est ajouté à la matière de base de moulage réfractaire étalée de manière stratifiée de telle sorte qu'au moins la matière de base de moulage réfractaire et l'acide forment la couche de matière de base de moulage et le composant de résine est appliqué de manière stratifiée par le biais de la tête d'impression sur la couche de matière de base de moulage, soit
(B) le composant de résine est ajouté à la matière de base de moulage réfractaire étalée de manière stratifiée de telle sorte qu'au moins la matière de base de moulage réfractaire et le composant de résine forment la couche de matière de base de moulage et l'acide est appliqué de manière stratifiée par le biais de la tête d'impression sur la couche de matière de base de moulage.

3. Procédé selon la revendication 1 ou 2, dans lequel le composant de résine contient plus de 5 % en poids, de préférence plus de 10 % en poids et de manière particulièrement préférée plus de 15 % en poids ainsi que moins de 50 % en poids, de préférence moins de 45 % en poids et de manière particulièrement préférée moins de 40 % en poids d'alcool furfurylique monomérique.

4. Procédé selon l'une des revendications précédentes, dans lequel le composant de résine contient plus de 20 % en poids, de préférence plus de 25 % en poids ainsi que moins de 85 % en poids et en particulier moins de 80 % en poids de résine de furane.

5. Procédé selon l'une des revendications précédentes, dans lequel la résine de furane est de préférence un produit de conversion d'alcool furfurylique et de formaldéhyde ainsi que le cas échéant de composés contenant de l'azote comme de préférence de l'urée, de préférence avec un rapport molaire de l'alcool furfurylique sur le formaldéhyde supérieur ou égal à 1, de préférence de 1:0,2 à 1:0,9, de préférence de 1:0,2 à 1:0,8 et de manière particulièrement préférée de 1:0,3 à 1:0,7.

6. Procédé selon l'une des revendications précédentes, dans lequel le catalyseur acide pour la fabrication du produit de conversion de formaldéhyde et d'alcool furfurylique est un acide ayant une valeur pKs de 2,7 à 6, de préférence une valeur pKs de 3 à 5, et est de manière particulièrement préférée l'acide lactique ou l'acide adipique ainsi que des combinaisons de ceux-ci.

7. Procédé selon l'une des revendications précédentes, dans lequel le composant de résine contient de 0 à 25 % en poids, de préférence de 1 à 20 % en poids et en particulier de préférence de 3 à 15 % en poids de produits de conversion de formaldéhyde et d'urée.

8. Procédé selon l'une des revendications précédentes, dans lequel les composés contenant de l'azote sont de l'urée et/ou la quantité de composés contenant de l'azote est choisie de telle sorte que la teneur en azote totale du composant de résine est inférieure à 5 % en poids, de préférence inférieure à 3,5 % en poids et de manière particulièrement préférée inférieure à 2 % en poids.

9. Procédé selon l'une des revendications précédentes, dans lequel la teneur totale en eau du composant de résine est au maximum de 40 % en poids, de préférence au maximum de 35 % en poids et de manière particulièrement préférée au maximum de 30 % en poids.

10. Procédé selon l'une des revendications précédentes, dans lequel le composant de résine comprend en plus un solvant organique qui n'est pas l'alcool furfurylique, ayant 1 à 25 atomes de carbone, de préférence des alcools, en particulier l'éthanol, la quantité de solvant organique ne dépassant pas une quantité de 30 % en poids, de préférence une quantité de 25 % en poids et de manière particulièrement préférée une quantité de 20 % en poids.

11. Procédé selon l'une des revendications précédentes, dans lequel le composant de résine présente une viscosité (DIN EN ISO 2555, Brookfield, 25°C) de 2 mPas à 70 mPas, de préférence de 5 mPas à 60 mPas et de manière particulièrement préférée de 5 mPas à 50 mPas à 25°C.

12. Procédé selon l'une des revendications précédentes, dans lequel le composant de résine présente une tension de surface à 20°C de 10 mN/m à 70 mN/m, de préférence de 15 mN/m à 60 mN/m, de manière particulièrement préférée de 15 mN/m à 55 mN/m et de manière tout particulièrement préférée de 20 mN/m à 50 mN/m, déterminée par la méthode des plaques selon Wilhelmy avec un tensiomètre à force K100 de Krüss à 20°C.

13. Procédé selon l'une des revendications précédentes, dans lequel la quantité de composant de résine atteint entre 0,1 % en poids et 5,3 % en poids, de préférence entre 0,3 % en poids et 4,3 % en poids et de manière particulièrement préférée entre 0,5 % en poids et 3,1 % en poids, par rapport à la matière de base de moulage réfractaire et/ou entre 0,1 % en poids et 5 % en poids, de préférence entre 0,3 % en poids et 4 % en poids et de manière particulièrement préférée entre 0,5 % en poids et 3 % en poids par rapport au mélange de matière de moulage.

14. Procédé selon l'une des revendications précédentes, ledit procédé étant en outre **caractérisé par** l'une ou plusieurs des caractéristiques suivantes :
a) l'acide pour le durcissement du composant de résine est un acide organique ou inorganique ou un mélange de ceux-ci ayant une valeur pKs à 25°C inférieure à 4, de préférence une valeur pKs inférieure ou égale à 3,9, de préférence une valeur pKs inférieure à 3 et de manière particulièrement préférée une valeur pKs inférieure à 1,5 ;
b) le composant acide du liant est l'acide *para*-toluènesulfonique, l'acide sulfurique ou l'acide lactique ou un mélange de ceux-ci ;
c) la quantité d'acide est comprise entre 0,1 % en poids à 3,1 % en poids, de préférence entre 0,1 % en poids et 2,6 % en poids et de manière particulièrement préférée entre 0,1 % en poids et 2,1 % en poids d'acide, par rapport à la matière de base de moulage réfractaire et/ou entre 0,1 % en poids à 3 % en poids, de préférence entre 0,1 % en poids et 2,5 % en poids et de manière particulièrement préférée entre 0,1 % en poids et 2 % en poids, par rapport au mélange de matière de moulage.

15. Procédé selon l'une des revendications précédentes, ledit procédé étant en outre **caractérisé par** l'une ou plusieurs des caractéristiques suivantes :
a) la matière de base de moulage réfractaire comprend un ou plusieurs composants du groupe consistant en sable de quartz, sable de zircone, sable de minerai de chrome, olivine, vermiculite, bauxite, chamotte, perles de verre, granulé de verre, microsphères creuses de silicate d'aluminium et leurs mélanges ;
b) la matière de base de moulage réfractaire présente un diamètre moyen de particules de 30 µm à 500 µm, de préférence entre 40 µm et 400 µm et de manière particulièrement préférée entre 50 µm et 250 µm ;
c) la matière de base de moulage réfractaire est mise en oeuvre à plus de 80 % en poids, de préférence à plus de 90 % en poids et de manière particulièrement préférée à plus de 95 % en poids, par rapport au mélange de matière de moulage.

16. Procédé selon l'une des revendications précédentes, dans lequel l'acide est ajouté à la matière de base de moulage réfractaire étalée de manière stratifiée, le mélange est fabriqué à partir d'acide et de matière de base de moulage de préférence à une température de 10°C à 45°C, et l'épaisseur de couche du mélange d'acide et de matière de base de moulage est de 0,03 mm à 3 mm, de préférence de 0,03 mm à 1,5 mm avant que des zones choisies du mélange d'acide et de matière de base de moulage ne soient imprimées sélectivement avec le composant de résine.

17. Procédé selon au moins l'une des revendications précédentes, comprenant en outre les étapes suivantes de :
i) durcissement du corps une fois la construction stratifiée achevée dans un four ou au moyen de micro-ondes et ensuite
ii) élimination du mélange non imprimé de composant acide ou de résine et de matière de base de moulage hors du moule de coulée au moins partiellement durci.

18. Procédé selon au moins l'une des revendications précédentes, ledit procédé étant en outre **caractérisé par** l'une ou plusieurs des caractéristiques suivantes :
a) la tête d'impression présente une multitude de buses et les buses sont de préférence pilotables sélectivement individuellement, la tête d'impression étant en particulier une tête d'impression goutte à la demande pourvue de jet de bulles ou de la technique piézoélectrique ;
b) la tête d'impression est commandée par un ordinateur pour être mobile au moins dans un plan et les buses appliquent au moins un composant de manière stratifiée et/ou la tête d'impression peut être chauffée ;
c) la température de la tête d'impression va de 20°C à 80°C.

19. Moule ou noyau pouvant être fabriqué d'après le procédé selon au moins l'une des revendications précédentes pour la coulée de métal, en particulier la coulée du fer, de l'acier, du cuivre ou de l'aluminium.
